# EUROPEAN PATENT SPECIFICATION

(11) **EP 3 883 375 B1**
(45) Date of publication and mention of the grant of the patent: **24.05.2023**
(21) Application number: 19805956.0
(22) Date of filing: 19.11.2019
(51) Int. Cl.: A01K 79/00

(54) **A PUMP SYSTEM**
PUMPSYSTEM
SYSTÈME DE POMPE

(30) Priority: 19.11.2018 NO 20181478
(43) Date of publication of application: 29.09.2021
(73) Proprietor: Mjøs Metallvarefabrikk AS, 5282 Lonevåg (NO)
(72) Inventor: ØVSTHUS, Eimund, 5282 Lonevåg (NO)
(74) Representative: Onsagers AS
(86) International application number: PCT/EP2019/081755
(87) International publication number: WO 2020/104431

(56) References cited:
- WO-A1-2009/131458
- GB-A- 2 042 641

## Description

### Technical Field

The present invention relates generally to a system for continuous pumping and transport of solid bodies in a liquid, and more particularly the present invention relates to a system which can be used, for example, in connection with loading, unloading and processing fish, or in connection with transport of fruits and vegetables.

### Background and prior art

The aquaculture industry is undergoing major changes and, in this context, needs innovative methods to deal with existing and new issues. Historically, farming in Norway has taken place in the fjords, which, thanks to Norwegian geography, has helped to place Norway among the foremost in the world in aquaculture.

Norwegian fish breeders express their desire and ambition to utilize sites which are more exposed to high waves and high current than is usual today. Utilization of such sites is believed to have many benefits for environmental sustainability, land use and value creation in the aquaculture industry among other things, but there are also several challenges that must be addressed before this is possible

Fish are pumped and transferred from one location to another, for example, between a net cage and a vessel, a net cage and a transfer or treatment process, a storage tank and a slaughterhouse/processing port or the like.

With the above-mentioned pumping and transferring of fish between two places, fish are subjected to stress that may cause damage to the fish and thus reduce the quality so that the fish is no longer suitable for the production it was intended. A number of factors may affect the quality of the fish, such as the size of the fish, the design of pipes in the system, the transport route and pump in the system, the distance the fish is be transported etc.

For this reason, the problems associated with pumping and transporting fish can be divided into three main categories: 1) compression of fish prior to pumping in order to make pumping more efficient, for example from a net cage to a vessel; 2) the design of the fish pump itself with the danger of causing damage to and wounding the fish passing through the fish pump, and 3) pump pipes or hoses with stress challenges caused by velocity of water through pump pipes or hoses, the distance the fish is to be pumped, loss of control of the fish through the pumping process and stopping of pump.

The pumping may wound and cause fin damage to the fish, suffusion of blood and in some cases bleeding gills and wounds. The stress level and the damage caused by the pumping may further result in reduced welfare and reduced product quality.

Physical damage to the fish may have to do with the design of the equipment (bends, welds, valves and pressure tank), but also physics as pressure reduction over time has been directly linked to bleeding gills.

Another stress factor will be the time the fish is in a tank.

The most common fish pumps used today are centrifugal pumps and vacuum-based pumps.

A centrifugal pump uses a rotating impeller arranged in a pump housing to increase the pressure in a liquid. The impeller is designed with rounded blades to avoid cutting damage to the fish. As the impeller starts to rotate, the water is discharged to the side and conducted through the pump housing in which the impeller is mounted, to an outlet of the pump. In the center of the impeller, a suction will then be formed where new water will flow in. Fish and water are fed into the center of the pump and thrown to the side via the impeller. Thereafter the fish are collected in a collection channel and transported further by the pressure that has been built up.

A "vacuum pump" uses a vacuum or pressure to transport fish, where the pump consists of a tank and a pipe or tube which is connected to each side of the tank. The tank alternates between underpressure (vacuum) and overpressure, to alternately suck fish from, for example, a net cage and then force the fish further from the tank and over to, for example, a well boat.

NO 169371 B relates to a method and apparatus for transporting of live fish, the method comprising feeding the fish together with water through an inlet to a closed, water filled transport container with a closable transport pipe, while simultaneously discharging a corresponding amount of water from the transport container through a closable outlet. The transport container is set under internal pressure by supplying pressurized water through a pressurized water pipe while simultaneously closing the inlet and outlet of the transport container, and that fish and water are flushed through the transport pipe to the destination

NO 306322 B1 relates to a method and apparatus for pumping of fish, comprising a pumping system for pumping fish into water with a container or pipe for fish and water with surrounding pipes, pumps and valves for transporting fish in water from a tank to another tank. The valves are opened in pairs to connect the container to the tank to which fish are to be pumped. Pump is used to circulate the water such that a mixture of fish and water flows into the container from the tank, and pump is used to circulate the water such that a mixture of fish and water flows from the container into the tank. Flushing back through the valve prevents fish from being damaged due to squeeze in the valve

NO 332235 B1 relates to a construction of a pumping system in which one end of a hose is led down to a bottom area for pumping solid particles into a mixture with water by means of a pumping body, the hose comprising one or more float elements adapted to maintain the hose substantially in an upright position in an ocean environment. The construction may be used in connection with an aquaculture cage in an ocean environment for pumping up sinking food waste, faeces and dead marine organisms, especially fish, or in a general pumping apparatus and system for pumping up waste such as slime and similar from a seabed.

GB 2042641 A discloses an apparatus for transferring solids comprising a nozzle for ejecting therethrough a fluid into a duct in the direction of the transfer of the solids.

Thus, there is a need for alternatives to the current system for pumping and transporting of fish, or at least supplementary devices.

### Summary of the invention

The objects of the present invention are to provide a system which is used for pumping and transporting a fluid containing solid bodies, where it through the system, which is formed with a minimum of bends, is provided for a continuous pumping and transport of the solid bodies, in particular fish, where the system ensures better fish welfare, reduces stress on the fish and reduces mortality among the fish, and where it further is expected reduced damage in the pumping process itself.

These objects are achieved according to the present invention with a system used for pumping and transporting of solid bodies as defined in the independent claim 1. Further embodiments of the invention are defined in the dependent claims.

The present invention relates to a system for pumping and transporting a liquid and solid bodies contained in the liquid, where the system comprises a pump connected to at least one driving device, a suction line which is arranged between the pump and a volume containing liquid and solid bodies which is to be pumped and transported, a straining box, and a receiving unit for reception of pumped and transported solid bodies, where the pump comprises a substantially horizontal inlet comprising an expanded region with a diameter formed for reception of an end of a suction line with a smaller diameter and a linear, mainly vertical outlet which opens into a bottom of the straining box, where the straining box further comprises an outlet for a first pipeline connected to the expanded region of the inlet and a second pipeline which is in fluid communication with the volume containing liquid and solid bodies.

According to an aspect of the present invention, a biomass detector or similar device may be mounted on the suction line, near the expanded region, or the biomass detector may also be mounted to the expanded region, whereby the biomass detector can thus detect density of biomass guided towards the pump, such that the density can be checked and/or controlled. The biomass detector may further be connected to a control unit which receives data from the biomass detector and which can then control the opening and closing of at least one valve arranged in the first pipeline extending between the outlet of the straining box and the expanded region, so that the amount of fish entering the pump can be controlled. For instance, if the biomass detector detects that too many fish pass through the suction line at the expanded region, when the system is used to pump and transport fish, the control unit may open the at least one valve arranged in the first pipeline, so that water from the straining box is allowed to flow through the first pipeline and further into the expanded region of the inlet. The water from the straining box will then pass through the gap formed between the suction line, the transition region between the expanded region and the narrowed region, and the narrowed region, so as to be mixed with liquid and fish which are guided through the suction line and towards the pump. The mixture of the water from the straining box and liquid and fish from the suction line results in a lower velocity in the suction line, which results in that the number of fish per unit time introduced into the pump is reduced. However, the pump capacity of the pump itself remains stable and unchanged. If the number of fish entering the pump per unit time is small or sufficiently large, the control unit will close the valve in the first pipeline, whereby water from the straining box will flow through the second pipeline and return to the volume containing liquid and solid bodies (for example, a net cage containing fish to be pumped and transported).

The at least one driving device may be, for instance, an electric motor, hydraulic motor or the like, or also a combination. A person skilled in the art will know that other types of driving devices may also be used.

Through the system for pumping and transporting a liquid and solid bodies contained in the liquid, for example, may fish be pumped and transported from the volume containing liquid and solid bodies to the receiving unit, by using a pump and the associated suction lines and pipelines.

According to one aspect of the present invention, the horizontal inlet may also comprise a narrowed region with a diameter substantially the same as the diameter of the suction line, where a transition region between the expanded region and the narrowed region may be continuously tapered, gradually tapered or also abrupt or sudden.

When the system for pumping and transporting a liquid and solid bodies contained therein is assembled, one end of the suction hose is brought into the expanded region of the substantially horizontal inlet. The suction line will then extend over a length of the expanded region and further a length into the transition region between the expanded region and the narrowed region, so that a gap is formed between one end of the suction line, the transition region between the expanded region and the narrowed region, and the narrowed region.

One end of the expanded region which faces away from the pump is closed by a lid, plate or the like, where the lid or plate is formed with an opening for the passage of the suction line. Suitable sealing means may be provided around a circumference of the opening provided in the lid or plate, so as to provide a tight connection between the lid or plate and the suction line. The lid or plate may be welded to the end of the expanded region. Alternatively, fastening devices in the form of bolts, nuts or the like may be used to connect the lid or plate to the end of the expanded region. The lid and the end of the expanded region will then be provided with holes for insertion of bolts etc.

According to one aspect of the present invention, an additional external pipeline may be connected to the expanded region or to the transition region between the expanded region and the narrowed region. Such an external pipeline may then be used alone, or together with the first pipeline to supply water to the expanded region in order to reduce the number of fish towards the pump.

A device for preventing fish from flowing into the expanded region of the horizontal inlet may be provided to cover the gap formed between the suction line, the transition region between the expanded region and the narrowed region, and the narrowed region, where, for example, such a device may be a grate, sieve or the like.

According to one aspect of the present invention, a regulating device may be connected to the suction hose so that the suction hose can be moved relative to the expanded region. Through the regulating device, the gap formed between the suction hose, the transition region between the expanded region and the narrowed region, and the narrowed region may be varied by pushing the suction line further into the narrowed region or by pulling the suction line away from the narrowed region. Depending on the gap opening, more or less water will be allowed to flow through the gap.

An outlet of the straining box may in one embodiment be designed as a branch leading to the first and second pipelines. Alternatively, the first and second pipelines may be separate pipelines extending out from the outlet in the straining box. Further, a device may be provided over the outlet of the straining box, where the device will prevent fish from following into the outlet, where such a device may be a grate, sieve or the like.

The pump used in the system for pumping and transporting of a liquid containing solid bodies may be a centrifugal pump, where the centrifugal pump comprises one or more rotating impellers which is/are arranged in a pump housing of the centrifugal pump. Each impeller may further be formed with a series of curved blades or vanes, or also with one or more flow channels.

The impeller may further comprise a main part, a shaft pin and an inlet spigot.

If the impeller is formed with one or more flow channels, each flow channel may have a length extending less than half a circumference of the impeller.

According to one aspect of the present invention, the centrifugal pump may comprise an impeller designed with a flow channel, where the flow channel may be designed to have a length extending less than half the circumference of the impeller, more preferably the flow channel may be designed to have a length extending less than one-third of the circumference of the impeller, even more preferably, the flow channel may be designed to have a length extending less than one-fourth of the circumference of the impeller. The flow channel will then extend from an inlet formed in the inlet spigot to an outlet formed in the main part. However, a person skilled in the art will understand that the impeller may be formed with a flow channel having a different length than specified above.

According to one aspect of the present invention, the impeller may be integrally molded, whereby the inlet spigot and shaft pin will be integrated with the main part, but it is also conceivable that the impeller may be made of separate parts, for example a part forming the inlet spigot, a part forming the shaft pin and a part forming the main part, which are then assembled and suitably connected to each other to form the impeller.

A transition between the main body of the impeller and the inlet spigot may be designed continuously and gradually tapered.

According to one aspect, the main part of the impeller may be designed to have a circular cylindrical shape with a given height and straight or flat top and bottom surfaces when viewed from the side, but a person skilled in the art will understand that the main part may also be designed to have other shapes, for example, a polygonal shape, where the body then may, for instance, be shaped like a hexagon or octagon.

In one embodiment, the impeller may be formed with a circular cylindrical shape, seen from above, where an outer circumference of the impeller may further be formed with a smooth and even outer surface.

According to one aspect of the present invention, the flow channel may have a substantially equal cross-section over the entire length of the flow channel, from the flow channel's inlet in the inlet spigot to the flow channel's outlet in the main body.

In one embodiment, the flow channel may, from the inlet to the outlet, be formed with a helical or curved shape, where the inlet of the flow channel will be situated along an axis of rotation of the impeller, while the outlet of the flow channel may be formed substantially perpendicular to the axis of rotation of the impeller.

The inlet opening in the centrifugal pump may be formed in a surface constituting the bottom or one side of the pump housing, while the outlet may be formed in a surface constituting one long side of the pump housing such that the outlet of the pump housing is arranged substantially perpendicular to the one or more inlets of the pump housing.

### Brief description of the drawings

Other advantages and features of the invention will become apparent from the following detailed description, the appended drawings and the following claims, wherein
Figure 1 shows an embodiment of a system for pumping and transporting liquid containing solid bodies according to the present invention, seen from a side,
Figure 2 shows a centrifugal pump which can be used with the system according to figure 1, shown from above,
Figure 3 shows an alternative embodiment of a centrifugal pump which can be used with the system according to figure 1, seen in a cross section along line A-A and from above;
Figure 4 shows another alternative embodiment of a centrifugal pump which can be used with the system according to figure 1, seen in a cross section and from above,
Figure 5 shows an embodiment of an impeller used with the pump according to the present invention, seen from the side and in a perspective view, and
Figures 6A-6B show details of the impeller according to figure 5, where figure 6A shows the impeller from above and figure 6B shows a cross-section of the impeller along a line B-B of figure 6A.

### Detailed description of the invention

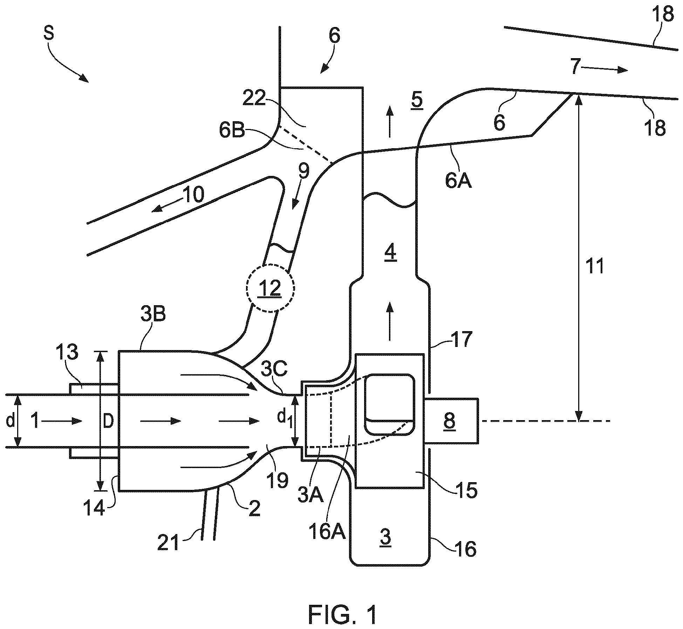

Figure 1 shows a principal sketch, seen from a side, of a system S for pumping and transporting liquid and solid bodies contained in the liquid according to the present invention, where the system S comprises a pump 3 which is connected to a driving device 8 in form of an electric motor, a hydraulic motor or the like, a suction line 1 arranged between the pump 3 and a volume (not shown in the figure) containing a liquid and solid bodies which are to be pumped and transported, a straining box 6, a receiving unit 7 (not shown in the figure) for the solid bodies and a pipeline 18 which is arranged between the straining box 6 and the receiving unit 7.

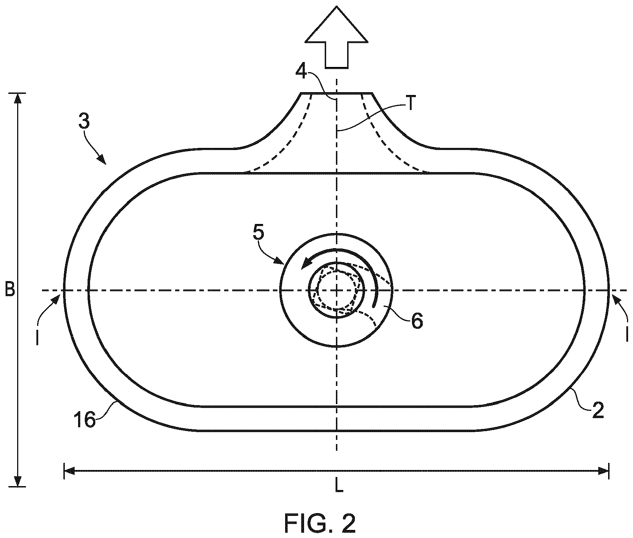

The pump 3, which is to be described in more detail with reference to figure 2, comprises a substantially horizontal inlet 3A, where the horizontal inlet 3A comprises an expanded region 3B with a diameter D for reception of an end of the suction line 1 and a narrowed region 3C with a diameter d1. A transition between the expanded region 3B and the narrowed region 3C is shown to be continuously tapered so as not to cause damage to the solid bodies during the pumping of liquid and solid bodies.

The suction line 1, which has a diameter d, where the diameter d of the suction line 1 can be the same as the diameter di of the narrowed region 3C, is inserted into the expanded region 3B through a lid 14 or plate connected to an end of the expanded region 3B that faces away from the inlet 3A. The lid 14 or plate is then formed with an opening (not shown) for reception and lead-through of the suction line 1.

The suction line 1 is guided so far into the expanded region 3B that one end of the suction line 1 will be in the vicinity of the narrowed region 3C, so that a gap 19 is formed between the end of the suction line 1 and the narrowed region 3C.

On the outside of the suction line 1, near the expanded region 3B, a biomass detector 13 is arranged, where the biomass detector 13 will detect a biomass which is passing through the suction line 1 and towards the inlet 3A of the pump 3.

The pump 3 also comprises a linear and substantially vertical outlet 4 which opens into a bottom 6A of the straining box 6.

The straining box 6 is suitably connected to the pipeline 18, where the pipeline 18 guides the solid bodies to the receiving unit 7 (not shown in the figure). A person skilled in the art will know that the pipeline 18 can be substituted or replaced with a slide or the like.

Conveniently, the bottom 6A of the straining box 6 may be formed slightly sloping, where the bottom 6A at a lowest height is formed with an outlet 6B for a liquid which is strained off in the straining box 6, where the outlet 6B is formed as a branch leading to a first pipeline 9 and a second pipeline 10. A sieve 22 or the like may be provided over outlet 6B so that fish are prevented from following down into the outlet 6B and further into the first or second pipeline 9, 10.

The first pipeline 9 is connected to the expanded region 3B of the substantially horizontal inlet 3A, so as to provide a connection between the outlet 6B of the straining box 6 and the expanded region 3B.

The second pipeline 10 is in connection with the volume containing liquid and solid bodies.

A valve 12 is further connected to the first pipeline 9, where the valve 12 is arranged downstream of the outlet 6B of the straining box 6. The valve 12 and the biomass detector 13 are connected to a control unit (not shown in the figure), whereby the control unit (not shown) based on the registration of biomass from the biomass detector 13 will be able to open and close the valve 12, so that water from the straining box 6 can flow through the first pipeline 9 and into the expanded region 3B of the substantially horizontal inlet 3A.

Through the above arrangement, the suction line 1 will be used to pump and transport liquid and solid bodies contained in the liquid from the volume containing liquid and solid bodies to the pump 3, further through the pump 3 and up to the bottom 6A of the straining box 6. In the straining box 6 will the water which is pumped up with the solid bodies, be separated from the solid bodies and this water will flow out towards the outlet 6B. The solid bodies will, through the pipeline 18 connected to the straining box 6, be guided to the receiving unit 7 (not shown in the figure).

If data that the control unit (not shown in the figure) receives from the biomass detector 13 shows that the biomass density at or in the expanded region 3B is too large, the control unit will send a signal to the valve 12 to open the valve 12, so that water strained from the straining box 9 can flow through the first pipeline 9 and into the expanded region 3B of the inlet 3A of the pump 3. The additional water discharged into the expanded region 3B through the open first pipeline 9 will flow through the gap 19 formed between the suction line 1, the transition region between the expanded region 3B and the narrowed region 3C, and the narrowed region 3C, and then be mixed with the liquid and solid bodies passing through the suction line 1.

This mixture of water from the straining box 6 and the liquid and fish from the suction line 1 will result in that a lower pressure and higher velocity will be formed at and in the narrowed region 3C, which will result in that the number of fish per unit of time transported into pump 3 is reduced. Similarly, the control unit (not shown) will keep the valve 12 closed at lower or satisfactory biomass density at the expanded region 3B, so that water strained from the straining box 6 will only be allowed to flow through the second pipeline 10 and back to the volume containing liquid and solid bodies.

In an alternative embodiment, an additional external pipeline 21 or hose may be connected to the expanded region 3B or to the transition region between the expanded region 3B and the narrowed region 3C, where this external pipeline 21 may then be used alone, or in combination with the first pipeline 9, so as to supply water to the expanded region 3B.

Figure 2 shows a pump which can be used in the system S for pumping and transporting a liquid and solid bodies contained in the liquid, seen from above, where the pump 3 comprises a pump housing 16 and a removable cover (not shown) which via suitable connecting devices in form of bolts, screws or the like is connected to the pump housing 16. The removable cover (not shown) may be of glass to provide an inspection opening in the pump 3. Such a design will also provide easier access to the internal volume of the pump housing so that maintenance and/or repairs of impeller etc. is facilitated.

In one embodiment, the pump 3 has a width B which is less than a length L of the pump 3 and is further formed with rounded short sides, thus providing an "oval" shape on the pump 3. The pump 3 is further formed with a flat top and bottom side when viewed in a longitudinal cross-section of the pump 3, where the top and bottom sides are arranged at a distance H from each other.

The pump housing 16 is, on an underside, when viewed in a longitudinal cross-section of the pump 3, formed with an inlet opening 3, where the inlet opening 3 is further arranged to be located along a longitudinal center line l and a transversal center line T of the pump 3. An outlet opening 4 is further arranged on one of the long sides of the pump housing 16, where the outlet opening 4 is located on the transverse center line T.

The inlet opening 3A is further formed with a flange or spigot forming the expanded og narrowed regions 3B, 3C, where the expanded and narrowed region 3B, 3C extends a distance out from the pump housing 16. An impeller 15 is further arranged in the pump housing 16.

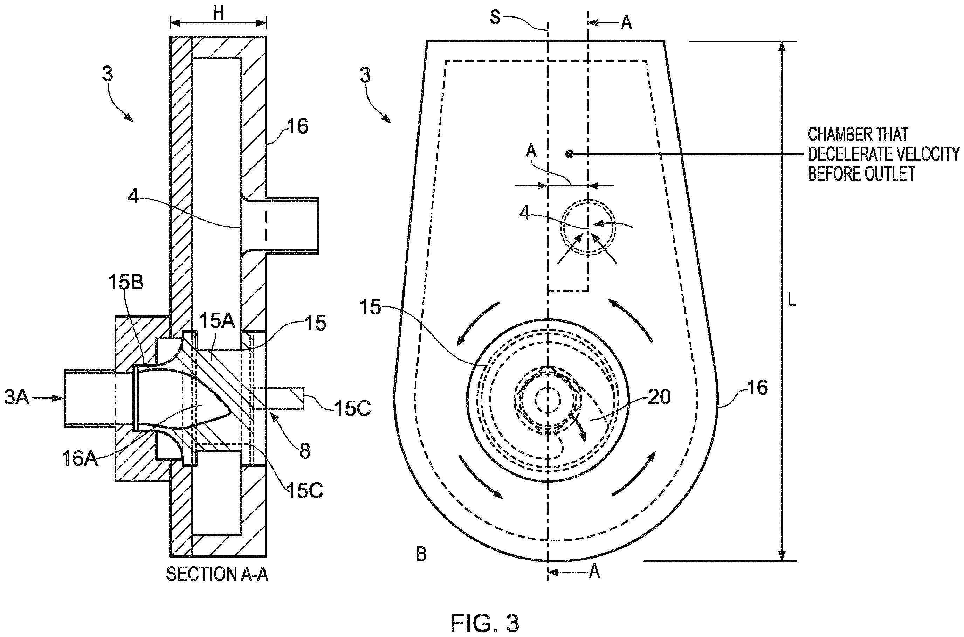

The impeller 15 used in the pump 3 is shown in figure 3, seen from a side and in a perspective view, where it appears that the impeller 15 comprises a main part 15A, an inlet spigot 15B and a shaft pin 15C, where the inlet spigot 15B and the shaft pin 15 are arranged on opposite sides of the main body 15A. Furthermore, the main part 15A of the impeller 15 is formed with a flow channel 16A which extends through the inlet spigot 15B and the main part 15A, where the inlet spigot 15B forms the inlet of the flow channel 16A. The outlet 20 of the flow channel 16A will be arranged substantially perpendicular to the flow channel 16A.

The inlet spigot 15B is formed with a shape complementary to the inlet port 3A of the pump housing 16 and an outer diameter of the inlet spigot 15B is somewhat smaller than a first inner cross-sectional area of the inlet port 3A.

Similarly, the shaft pin 15C will be formed with a shape complementary to the throughgoing holes 8 of the pump housing 16 and an outer diameter somewhat smaller than an inner cross-section of the throughgoing hole 8.

Figure 3 shows an alternative pump 3 which can be used in the system S for pumping and transporting a liquid and solid bodies contained in the liquid, seen from above, and in a cross section through AA, where the pump 3 comprises a pump housing 16 and a cover (not shown) which via suitable connecting devices in the form of bolt, screws or the like are connected to the pump housing 16. The cover (not shown) may be of glass, to provide an inspection opening in the pump 3. Such a design will also provide easier access to the internal volume of the pump housing 16, so that maintenance and/or repairs of impellers etc. are facilitated.

One short side of the pump 3 is formed with a semicircle, while an opposite and second short side is formed with a flat surface and where the pump 3 further has a maximum width B, at the short side with a half circle, less than a length L of the pump 3. The pump housing 16 is further formed with planar or flat sides, when seen in a longitudinal cross-section of the pump 3, where the planar or flat sides are arranged at a distance H from each other.

The pump housing 16 is, on one of its side, when seen in a longitudinal cross-section of the pump 3, formed with an inlet opening 3A, where the inlet opening 3A is further arranged to be on a longitudinal center line 1. An opposite side of the pump housing 16 is formed with an outlet port 4, where the outlet port 4 is arranged to be at a distance A from the longitudinal center line l and at a distance from inlet port 3A.

The inlet opening 3A is further formed with a flange or spigot forming the expanded and narrowed region 3B, 3C, see also figure 1, where the expanded and narrowed region 3B, 3C extends a distance from the pump housing 16. An impeller 15 is further arranged in the pump housing 16.

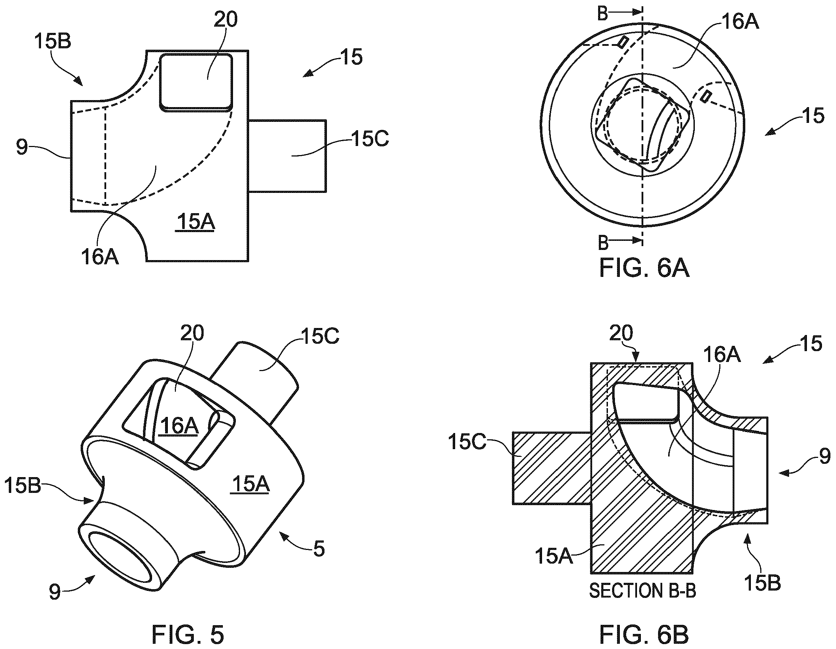

The impeller 15 used in the pump 3 is shown in figure 5, seen from the side and in a perspective view, where it appears that the impeller 15 comprises a main part 15A, an inlet spigot 15B and a shaft pin 15C, where the inlet spigot 15B and the shaft pin 15 are arranged on opposite sides of the main body 15A. Furthermore, the main part 15A of the impeller 15 is formed with a flow channel 16A extending through the inlet spigot 15B and the main part 15A, where the inlet spigot 15B forms the inlet of the flow channel 16A. The outlet 20 of the flow channel 16A will be arranged substantially perpendicular to the flow channel 16A.

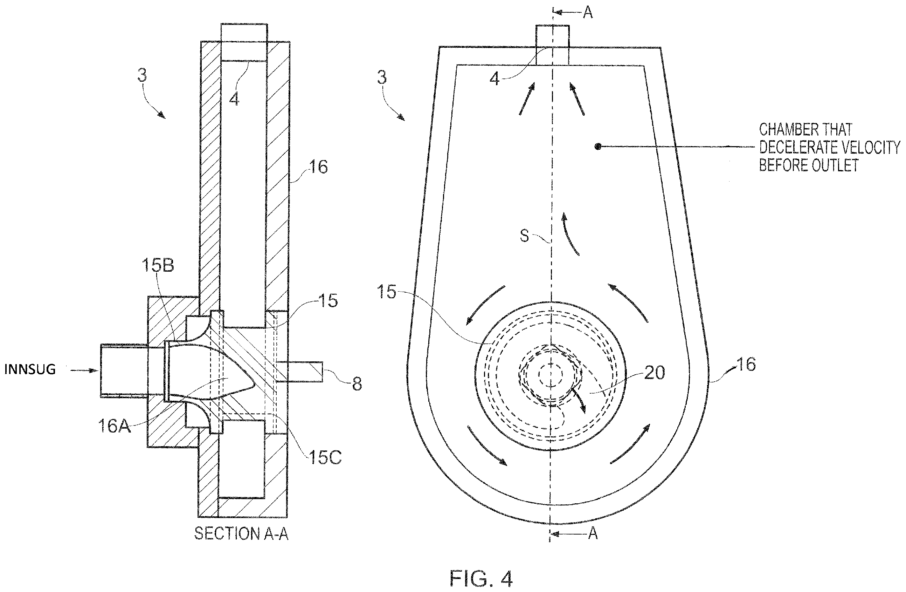

A further alternative design of a centrifugal pump which can be used with the system 1 according to figure 1 is shown in figure 4, seen from above and in a cross section through line A-A. The pump 3 comprises a pump housing 16 and a cover (not shown), where the cover is connected to the pump housing 16. through suitable connecting means in the form of bolt, screw or the like. The cover (not shown) can be made of glass, so as to provide an inspection opening in the pump 3. Such a design will also provide easier access to the internal volume of the pump housing 16, so that maintenance and/or repairs of impellers etc. are facilitated.

One short side of the pump 3 is formed with a semicircle, while an opposite and second short side is formed with a flat surface and where the pump 3 further has a maximum width B at the short side with a half circle which is less than a length L of the pump 3. The pump housing 16 is further formed with planar or flat sides, when viewed in a longitudinal cross-section of the pump 3, where the planar or flat sides are arranged at a distance H from each other.

The pump housing 16 is, on one of its sides, when seen in a longitudinal cross section of the pump 3, formed with an inlet opening 3A, where the inlet opening 3A is further arranged to be on a longitudinal center line 1. The short side of the pump housing 16 which is formed with the plane surface, is formed with an outlet opening 4, where the outlet opening 4 is also arranged to be on the longitudinal center line l.

The inlet opening 3A is further formed with a flange or spigot forming the expanded and narrowed region 3B, 3C, see also figure 1, where the expanded and narrowed region 3B, 3C extends a distance out from the pump housing 16. An impeller 15 is further arranged in pump housing 16.

The impeller 15 used in the pump 3 is shown in figure 5, seen from the side and in a perspective view, where it appears that the impeller 15 comprises a main part 15A, an inlet spigot 15B and a shaft pin 15C, where the inlet spigot 15B and the shaft pin 15C are arranged on opposite sides of the main part 15A. Furthermore, the main part 15A of the impeller 15 is formed with a flow channel 16A extending through the inlet spigot 15B and the main part 15A, where the inlet spigot 15B forms the inlet of the flow channel 16A. The outlet 20 of the flow channel 16A will be arranged substantially perpendicular to the flow channel 16.

Figures 6A-6B show further details of the impeller 15.

The flow channel 16A is designed to have substantially the same cross-sectional area over the entire length of the flow channel 16A, from the inlet of the flow channel 16A to the outlet 20 of the flow channel 16A, where the flow channel 16A will further be helically or helically shaped. Such a design of the impeller's 15 flow channel 16A will cause the fish to be subjected to impact and/or damage to a much lesser extent, as the flow channel 16A is not formed with edges or "bends" against which the fish can be hit. Furthermore, fish will come into less contact with other fish over the length of the flow channel 16A, since substantially the same cross-sectional area will result in a contraction of fish.

The system for pumping and transporting a liquid containing solid bodies ensures a gentle pumping and transport of fish from the volume containing liquid and solid bodies and a straining box with only a pump as a combined pipe leg.

The invention has now been explained with several non-limiting examples. One skilled in the art will appreciate that a variety of variations and modifications can be made to the fish pump for loading and unloading fish as described within the scope of the invention as defined in the appended claims.

## Claims

1. A system (S) for pumping and transporting of a liquid containing solid bodies, where the system (S) comprises a pump (3) connected to a driving device (8), a suction line (1) arranged between the pump (3) and a volume containing liquid and solid bodies to be pumped and transported, a straining box (6), a receiving unit (7) and a pipeline for transporting solid bodies, **characterized in that** the pump (3) comprises a horizontal inlet (3A) comprising an expanded region (3B) having a diameter (D) for reception of an end of the suction line (1) with a diameter (d), and a linear, substantially vertical outlet (4) which leads into a bottom (6A) in the straining box (6), the suction line (1) and the vertical outlet (4) being arranged for transporting of liquid containing solid bodies, where the straining box (6) further comprises a return fluid outlet (6B) for a first conduit (9) connected to the expanded region (3B) of the inlet (3A) and a second conduit (10) which is in connection with the volume contained the liquid and solid bodies, where a biomass detector (13) is connected to the suction line (1) or the extended region (3B) and a valve (12) is arranged in the first pipeline (9), the biomass detector (13) is further connected to a control unit which receives data from the biomass detector (13) and which then controls the opening and closing of said valve (12).

2. A system (S) according to claim 1, **characterized in that** the horizontal inlet (3A) further comprises a narrowed region (3C) of diameter (d₁).

3. A system (S) according to claim 1 and 2, **characterized in that** a transition region between the expanded region (3B) and the narrowed region (3C) is continuously tapered.

4. A system (S) according to claim 1 or 2, **characterized in that** an additional pipeline (21) is connected to the expanded region (3B) or to the transition region between the expanded region (3B) and the narrowed region (3C).

5. A system (S) according to claim 1, **characterized in that** the outlet (6B) comprises a branch leading to the first and second pipelines (9, 10).

6. A system according to claim 1, **characterized in that** one end of the expanded region (3B) which faces away from the pump (3) is closed with a plate (14) formed with an opening for reception and leadthrough of the suction line (1).

7. A system (S) according to claim 1, **characterized in that** the pump (3) is a centrifugal pump comprising at least one rotary impeller (15) arranged in a pump housing (17).

8. A system (S) according to claim 7, **characterized in that** the rotary impeller (15) is formed with a flow channel (16).

9. A system (S) of claim 8, **characterized in that** the flow channel (16) has a substantially equal cross-section over the entire length of the flow channel (16).

10. A system (S) according to any one of claims 7-9, **characterized in that** the flow channel (16), from an inlet to an outlet, has a helical or curved shape.

11. Use of a system (S) for pumping and transporting solid bodies contained in a liquid according to one or more of the claims 1-10 for transport of fish.

12. Use of a system (S) for pumping and transporting solid bodies contained in a liquid according to one or more of claims 1-10 for transport of apples, potatoes or the like.

## Patentansprüche

1. System (S) zum Pumpen und Transportieren einer Flüssigkeit, die Festkörper enthält, wobei das System (S) eine Pumpe (3), die mit einer Antriebsvorrichtung (8) verbunden ist, eine Ansaugleitung (1), die zwischen der Pumpe (3) und einem Volumen angeordnet ist, das die Flüssigkeit und die Festkörper enthält, die zu pumpen und zu transportieren sind, einen Filterkasten (6), eine Aufnahmeeinheit (7) und eine Rohrleitung zum Transportieren der Festkörper umfasst, **dadurch gekennzeichnet, dass** die Pumpe (3) einen horizontalen Einlass (3A), der eine erweiterte Region (3B) mit einem Durchmesser (D) zur Aufnahme eines Endes der Ansaugleitung (1) mit einem Durchmesser (d) umfasst, und einen linearen, im Wesentlichen vertikalen Auslass (4) umfasst, der in einen Boden (6A) des Filterkastens (6) führt, wobei die Ansaugleitung (1) und der vertikale Auslass (4) dazu angeordnet sind, die Flüssigkeit zu transportieren, welche die Festkörper enthält, wobei der Filterkasten (6) ferner einen Rückführfluidauslass (6B) für eine erste Leitung (9), die mit der erweiterten Region (3B) des Einlasses (3A) verbunden ist, und eine zweite Leitung (10) umfasst, die in Verbindung mit dem Volumen steht, das die Flüssigkeit und die Festkörper enthält, wobei ein Biomassedetektor (13) mit der Ansaugleitung (1) oder der verlängerten Region (3B) verbunden ist und ein Ventil (12) in der ersten Rohrleitung (9) angeordnet ist, wobei der Biomassedetektor (13) ferner mit einer Steuereinheit verbunden ist, die Daten von dem Biomassedetektor (13) empfängt und die dann das Öffnen und Schließen des Ventils (12) steuert.

2. System (S) nach Anspruch 1, **dadurch gekennzeichnet, dass** der horizontale Einlass (3A) ferner eine verengte Region (3C) mit einem Durchmesser (d₁) umfasst.

3. System (S) nach Anspruch 1 und 2, **dadurch gekennzeichnet, dass** eine Übergangsregion zwischen der erweiterten Region (3B) und der verengten Region (3C) kontinuierlich verjüngt ist.

4. System (S) nach Anspruch 1 oder 2, **dadurch gekennzeichnet, dass** eine zusätzliche Rohrleitung (21) mit der erweiterten Region (3B) oder mit der Übergangsregion zwischen der erweiterten Region (3B) und der verengten Region (3C) verbunden ist.

5. System (S) nach Anspruch 1, **dadurch gekennzeichnet, dass** der Auslass (6B) eine Verzweigung umfasst, die zu der ersten und der zweiten Rohrleitung (9, 10) führt.

6. System nach Anspruch 1, **dadurch gekennzeichnet, dass** ein Ende der erweiterten Region (3B), das von der Pumpe (3) abgewandt ist, mit einer Platte (14) verschlossen ist, die mit einer Öffnung zur Aufnahme und Durchführung der Ansaugleitung (1) ausgebildet ist.

7. System (S) nach Anspruch 1, **dadurch gekennzeichnet, dass** die Pumpe (3) eine Zentrifugalpumpe ist, die mindestens ein Drehlaufrad (15) umfasst, das in einem Pumpengehäuse (17) angeordnet ist.

8. System (S) nach Anspruch 7, **dadurch gekennzeichnet, dass** das Drehlaufrad (15) mit einem Strömungskanal (16) ausgebildet ist.

9. System (S) nach Anspruch 8, **dadurch gekennzeichnet, dass** der Strömungskanal (16) einen im Wesentlichen gleichen Querschnitt über die gesamte Länge des Strömungskanals (16) aufweist.

10. System (S) nach einem der Ansprüche 7-9, **dadurch gekennzeichnet, dass** der Strömungskanal (16) von einem Einlass bis zu einem Auslass eine spiralförmige oder gekrümmte Form aufweist.

11. Verwendung eines Systems (S) zum Pumpen und Transportieren von Festkörpern, die in einer Flüssigkeit enthalten sind, nach einem oder mehreren der Ansprüche 1-10 zum Transport von Fischen.

12. Verwendung eines Systems (S) zum Pumpen und Transportieren von Festkörpern, die in einer Flüssigkeit enthalten sind, nach einem oder mehreren der Ansprüche 1-10 zum Transport von Äpfeln, Kartoffeln oder dergleichen.

## Revendications

1. Système (S) de pompage et de transport d'un liquide contenant des corps solides, où le système (S) comprend une pompe (3) connectée à un dispositif d'entraînement (8), une conduite d'aspiration (1) agencée entre la pompe (3) et un volume contenant des corps liquides et solides à pomper et à transporter, une boîte de filtrage (6), une unité de réception (7) et une conduite pour transporter des corps solides, **caractérisé en ce que** la pompe (3) comprend une entrée (3A) horizontale comprenant une région élargie (3B) ayant un diamètre (D) pour la réception d'une extrémité de la conduite d'aspiration (1) avec un diamètre (D), et une sortie (4) linéaire sensiblement verticale qui mène dans un fond (6A) dans la boîte de filtrage (6), la conduite d'aspiration (1) et la sortie (4) verticale étant agencées pour le transport d'un liquide contenant des corps solides, où la boîte de filtrage (6) comprend en outre une sortie (6B) de fluide de retour pour un premier conduit (9) connecté à la région élargie (3B) de l'entrée (3A) et un deuxième conduit (10) qui est en connexion avec le volume contenant le liquide et les corps solides, où un détecteur de biomasse (13) est connecté à la conduite d'aspiration (1) ou à la région élargie (3B) et une soupape (12) est agencée dans la première conduite (9), le détecteur de biomasse (13) est en outre connecté à une unité de commande qui reçoit des données du détecteur de biomasse (13) et qui commande ensuite l'ouverture et la fermeture de ladite soupape (12).

2. Système (S) selon la revendication 1, **caractérisé en ce que** l'entrée (3A) horizontale comprend en outre une région rétrécie (3C) de diamètre (d₁).

3. Système (S) selon la revendication 1 et 2, **caractérisé en ce qu'**une région de transition entre la région élargie (3B) et la région rétrécie (3C) présente une conicité continue.

4. Système (S) selon la revendication 1 ou 2, **caractérisé en ce qu'**une conduite supplémentaire (21) est connectée à la région élargie (3B) ou à la région de transition entre la région élargie (3B) et la région rétrécie (3C).

5. Système (S) selon la revendication 1, **caractérisé en ce que** la sortie (6B) comprend une branche menant aux première et deuxième conduites (9, 10).

6. Système selon la revendication 1, **caractérisé en ce qu'**une extrémité de la région élargie (3B) qui est tournée à l'opposé de la pompe (3) est fermée par une plaque (14) formée avec une ouverture pour la réception et le passage de la conduite d'aspiration (1).

7. Système (S) selon la revendication 1, **caractérisé en ce que** la pompe (3) est une pompe centrifuge comprenant au moins une roue rotative (15) agencée dans un carter de pompe (17).

8. Système (S) selon la revendication 7, **caractérisé en ce que** la roue rotative (15) est formée avec un canal d'écoulement (16).

9. Système (S) selon la revendication 8, **caractérisé en ce que** le canal d'écoulement (16) a une section transversale sensiblement égale sur toute la longueur du canal d'écoulement (16).

10. Système (S) selon l'une quelconque des revendications 7 à 9, **caractérisé en ce que** le canal d'écoulement (16), d'une entrée à une sortie, a une forme hélicoïdale ou incurvée.

11. Utilisation d'un système (S) de pompage et de transport de corps solides contenus dans un liquide selon une ou plusieurs des revendications 1 à 10 pour le transport de poissons.

12. Utilisation d'un système (S) de pompage et de transport de corps solides contenus dans un liquide selon une ou plusieurs des revendications 1 à 10 pour le transport de pommes, de pommes de terre ou analogues.
